# EUROPEAN PATENT SPECIFICATION

(11) **EP 1 531 286 B1**
(45) Date of publication and mention of the grant of the patent: **18.10.2006**
(21) Application number: 03025971.7
(22) Date of filing: 13.11.2003
(51) Int. Cl.: F16H 3/093

(54) **Motor vehicle gearbox**
Kraftfahrzeuggetriebe
Boîte de vitesse pour véhicule motorisé

(43) Date of publication of application: 18.05.2005
(73) Proprietor: Ford Global Technologies, LLC., Dearborn MI 48126 (US)
(72) Inventor: Enström, Hans, 443 31 Lerum (SE)
(74) Representative: Hellbom, Lars Olof

(56) References cited:
- EP-A- 0 648 958
- FR-A- 2 819 873
- US-A- 4 793 202
- US-A- 5 715 727

## Description

The present invention relates to a motor vehicle gearbox comprising a housing with an input shaft and two countershafts lying in a plane offset from the input shaft and having gear wheels in engagement with gear wheels on the input shaft for transmitting torque with a number of forward gear speeds, at least one gear wheel of each pair of mutually engaging gear wheels on said input shaft and said countershafts being disengageable from its shaft, a gear wheel for transmitting torque in reverse being disengageably carried on a fourth shaft, each of said countershafts and said fourth shaft having a gear wheel non-rotatably joined to the shaft for transferring torque to output means, e. g. a crown wheel of a differential.

A gearbox of the above described type is known, e.g. by US 5 715 727. It has five or six speeds forward and one in reverse. Torque in reverse is transmitted from the input shaft via the first gear speed disengageable gear wheel on one of the countershafts to a reverse speed gear wheel on the fourth shaft. A five speed gearbox of this type can be made shorter than more common five speed gearboxes with two countershaft wherein torque is transmitted in reverse from the input shaft via one of the countershafts to the other countershaft. Alternatively, a six speed gearbox of the above described type can be made as short as a five speed gearbox which uses one of the countershafts as a reverse shaft.

One object of the present invention, starting from the above described gearbox, is to achieve a gearbox, which can have at least one more forward gear speed within the axial dimensions of the above described gearbox.

Another object of the present invention, starting from the above described gearbox, is to achieve a gearbox which uses said fourth reverse shaft for a forward crawling gear speed.

A further object of the present invention, starting from the above described gearbox, is to achieve a gearbox which uses said fourth reverse shaft for a reverse crawling speed.

This is achieved according to the invention by virtue of the fact that said fourth shaft carries disengageably a second gear wheel engaging a first gear wheel carried on a transfer shaft lying in a plane offset from the fourth shaft, said transfer shaft carrying a second gear wheel which engages a disengageable gear wheel on one of the countershafts.

Instead of placing another gear wheel on the input shaft and on one of the countershafts, which would require an increase of the length of said shafts and also of the axial dimension of the gearbox housing, a second disengageable gear wheel is mounted on the reverse shaft. By using, according to the invention, a transfer shaft to transfer torque from one of the countershafts to this second gear wheel on the reverse shaft this shaft will, upon engagement of this second gear wheel, rotate in the same direction as the countershafts thereby providing a further forward gear step. In this manner a further forward speed gear step is obtained without any need for increase of the axial dimensions of the gearbox.

In one preferred embodiment of the invention the tranfer shaft carries a third gear wheel arranged to transfer, via a gear wheel on an intermediate shaft, torque to a reverse gear wheel on the fourth shaft. By using the transfer shaft to transmit torque via an intemediate gear wheel to a reverse gear wheel on the fourth shaft instead of tranferring torque directly from a gear wheel one of the countershafs to a reverse gear wheel on the fourth shaft a reverse crawling speed can be obtained which has a substantially higher gear ratio than the regular reverse gear.

In a preferred embodiment of the invention the input shaft has six gear wheels in engagement with gear wheels on the countershafts for transferring torque to the crown wheel for forward drive with six different gear speeds. The disengageable gear wheel engaging the second gear wheel on the transfer shaft is the gear wheel for transferring torque in the first gear speed thereby transferring torque to the crown wheel for forward drive with a crawling gear speed having a higher gear ratio than the gear ratio of the first gear speed.

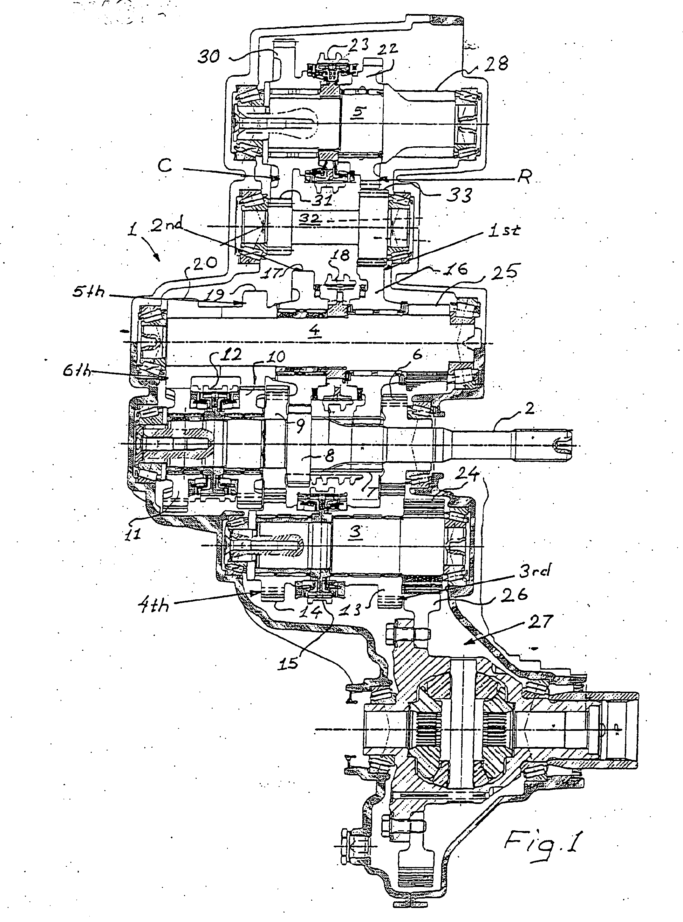

The invention will be described in more detail below with reference to examples shown in the accompanying drawings, where
Fig. 1 shows a schematic longitudinal section through one embodiment of a six speed gearbox according to the invention,

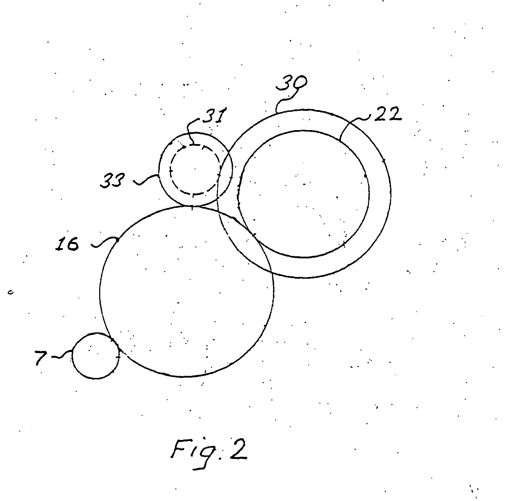

Fig. 2 shows a layout of the gear wheels involved to transfer torque when 1^{st}, reverse and crawling gear is engaged,
Fig. 3 shows a schematic longitudinal section similar to Fig. 1 through a portion of a second embodiment of a gearbox according to the invention,
Fig. 4 shows a layout of the gear wheels involved to transfer torque when 1^{st}, forward crawling, reverse and reverse crawling gear is engaged,
Fig. 5 shows a schematic longitudinal section similar to Fig. 1 through a portion of a third embodiment of a gearbox according to the invention, and
Fig. 6 shows a layout of the gear wheels involved to transfer torque when 1^{st}, reverse and crawling gear is engaged.

In a gearbox housing generally designated 1 an input shaft 2, a first countershaft 3, a second countershaft 4 and a reverse gear shaft 5 are rotatably mounted. The input shaft 2 carries a disc of a clutch (not shown) and six gear wheels 6, 7, 8, 9, 10 and 11, of which the gears wheels 6, 7, 8 and 9 are non-rotatably fixed to the shaft 2 while the gear wheels 10 and 11 are disengageable gear wheels, i. e. they are rotatably mounted on its shaft 2 but can be locked or released in a conventional manner by means of an engaging sleeve 12 with associated synchronizing means. On the countershaft 3, a pair of gear wheels 13 and 14 are rotatably mounted and are lockable to the shaft 3 by means of an engaging sleeve 15 with associated synchronizing means. On the countershaft 4 a pair of gear wheels 16 and 17 are rotatably mounted and are lockable to the shaft by means of an engaging sleeve 18 with associated synchronizing means. The countershaft 4 also carries a gear wheel 19 and a gear wheel 20 which are non-rotatably joined to the shaft 4. On the reverse gear shaft 5 a gear wheel 22 engaging the gear wheel 16 is rotatably mounted and is lockable to the shaft 4 by means of an engaging sleeve, or clutch, 23 with associated synchronizing means.

A pair of gear wheels 24 and 25 are each non-rotatably fixed to its respective countershaft 3 and 4 and each engages a crown wheel 26 of a differential generally designated 27. A gear wheel 28 is non-rotatably fixed to the reverse shaft 5 and engages the crown wheel 26.

According to the invention a gear wheel 30 is rotatably mounted on the reverse shaft 5. The gear wheel 30 can be locked to the shaft 5 by means of the engaging sleeve 23 and engages a gear wheel 31 which is non-rotatably mounted on a transfer shaft 32 located between the countershaft 4 and the reverse shaft 5. A gear wheel 33 non-rotatably mounted on the transfer shaft 32 engages the gear wheel 16 on the countershaft 4.

In the described gearbox torque is transferred in 1^{st}, 2^{nd}, 5^{th} and 6^{th} gear speeds from the input shaft 2 via the countershaft 4 and its non-rotatable gear wheel 25 to the crown wheel 26 and in 3^{rd} and 4^{th} gear speeds via the countershaft 3 to the crown wheel 26. Which gear wheel engage in respective gear speeds is evident from the Figures and only the torque transfer for 1^{st}, reverse and crawling gear speeds will be described here.

With the disengageable gear wheel 16 locked to the countershaft 4 by means of the engaging sleeve 18 and the rest of the disengageable gears disengaged 1^{st} gear speed is obtained. When shifting from 1^{st} to reverse, the disengageable gear wheel 16 is disengaged and the reverse disengageable gear wheel 22 is engaged instead by means of the engaging sleeve 23. 1^{st} gear speed gear wheel 16, which engages reverse gear wheel 22, will then serve as an idler to impart a direction of rotation to the reverse shaft 5 which is opposite to the rotational direction of the countershafts 3 and 4.

With the disengageable gear wheel 30 on the reverse shaft 5 locked to its shaft by means of the engaging sleeve 23 and the rest of the disengageable gears disengaged a so called crawling gear having a higher gear ratio than 1^{st} gear can be obtained. As in reverse the gear wheel 16 will serve as an idler to rotate the engaging gear wheel, i. e. the gear wheel 33, and along with it the transfer shaft 32 in a direction opposite to the rotational direction of the countershafts and as a result the gear wheel 30 and along with it the reverse shaft 5 will be rotated in the same direction of rotation as the countershafts 3 and 4.

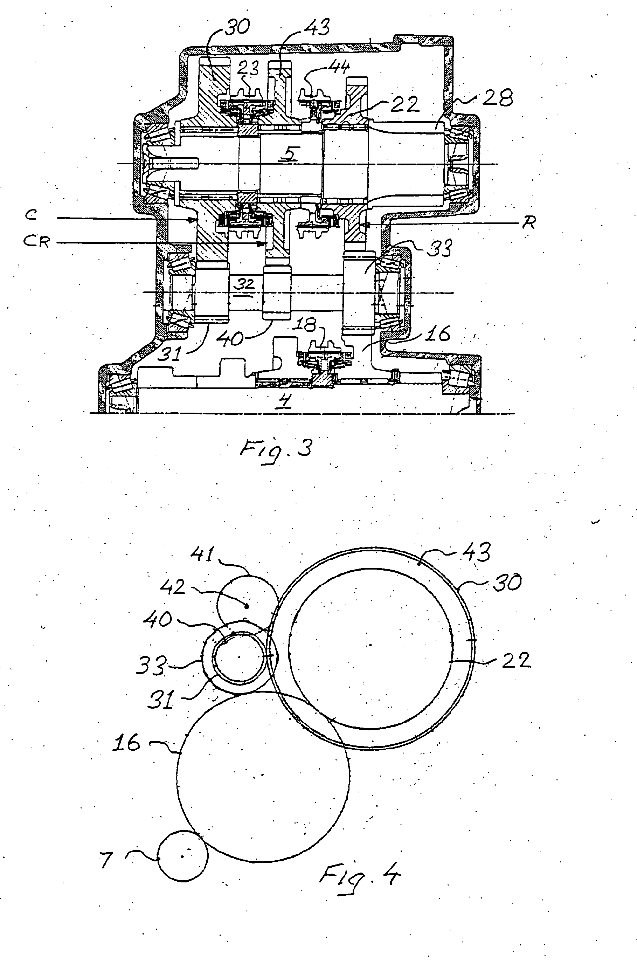

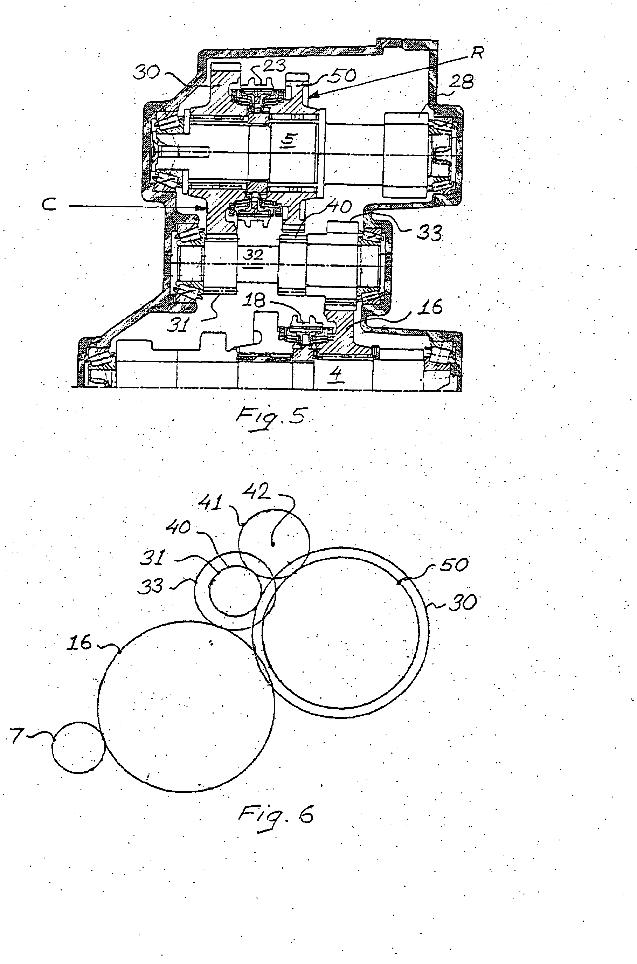

The embodiment shown in Fig. 3 and Fig. 4 differs from the one described above in that the transfer shaft 32 carries non-rotatably a third gear wheel 40 which engages an intermediate gear wheel 41 on an intermediate shaft 42 (Fig. 4). This intermediate gear wheel 41 engages a second reverse gear wheel 43 which is rotatably journalled on the fourth shaft 5 and is lockable on this shaft by means of the engaging sleeve 23. Reverse gear wheel 22 is lockable on the shaft 5 by means of an additional engaging sleeve 44 with associated synchronizing means.

As can be seen in Fig. 3 and Fig. 4 the radius of second reverse gear wheel 43 is larger than the radius of the reverse gear wheel 22. Also the radius of the third gear wheel 40 on the transfer shaft 32 is about the same as the radius of the 1^{st} gear speed gear wheel 7 on the input shaft so that the second reverse gear wheel 43 will provide a second reverse gear speed, a crawling reverse, with a higher gear ratio than the reverse gear wheel 22.

In Fig. 5 and Fig. 6 a third embodiment is shown which differs from the one shown in Fig. 3 and Fig. 4 only in that the reverse gear wheel 22 with its associated engaging sleeve 44 with synchronizing means have been removed and that a reverse gear wheel 50 is journalled on the fourth shaft 5 which has a smaller radius than the second reverse gear wheel 43 to provide not a crawling reverse but a reverse with approximately the ratio as 1^{st} forward gear speed.

The advantage of using the reverse arrangements of the second and third embodiments described above is the same basic gearbox layout can be used for a gearbox regardless whether an extra crawling reverse is required or not.

According to the invention, as is evident from the decription above, in addition to six forward gear speeds of a previously known gearbox a further forward gear speed and also if required a further reverse gear speed can be achieved without the need to increase the axial dimensions of the gearbox housing.

## Claims

1. Motor vehicle gearbox comprising a housing (1) with an input shaft (2) and two countershafts (3, 4) lying in a plane offset from the input shaft and having gear wheels (13, 14, 16, 17, 19, 20) in engagement with gear wheels (6-11) on the input shaft for transferring torque with a number of forward gear speeds, at least one gear wheel of each pair of mutually engaging gear wheels on said input shaft and said countershafts being disengageable from its shaft, a gear wheel (22) for transferring torque in reverse being disengagebly carried on a fourth shaft (5), each of said countershafts and said fourth shaft having a gear wheel (24, 25, 28) non-rotatably joined to its shaft for transferring torque to output means (26), **characterized in that said** fourth shaft (5) carries disengageably a second gear wheel (30) engaging a first gear wheel (31) carried on a transfer shaft (32) lying in a plane offset from the fourth shaft, said transfer shaft carrying.a second gear wheel (33) which engages a disengageable gear wheel (16) on one (4) of the countershafts for transferring torque with a forward gear speed.

2. Gearbox according to claim 1, **characterized in that** a disengageable gear wheel (22) on the fourth shaft (5) for transferring torque in reverse engages a disengageable gear wheel (16) on one of the countershafts (4).

3. Gearbox according to claim 1 or 2, **characterized in that** said transfer shaft (32) carries a third gear wheel (40) which, via a gear wheel (41) on an intermediate shaft (42), tranfers torque to a gear wheel (43;50) disengageably carried on the fourth shaft (5) for transferring torque in reverse.

4. Gearbox according to one of claims 1-3, **characterized in that** said output means is a crown wheel (26) of a differential (27) engaging said gear wheels (24,25,28) non-rotatably joined to the countershafts (3,4) and the fourth shaft (5).

5. Gearbox according to claim 4, **characterized in that** he input shaft has at least five gear wheels (6-11) in engagement with gear wheels (13, 14, 16, 17, 19, 20) on the countershafts (3, 4) for tranferring torque to the crown wheel (26) for forward drive with at least five different gear speeds and that said disengageable gear wheel (16) engaging the second gear wheel (33) on the transfer shaft is the gear wheel for transferring torque in the first gear speed so as to transfer torque for forward drive with an additional gear speed different from said five different gear speeds.

6. Gearbox according to claim 5, **characterized in that** said additional gear speed is a crawling gear speed with a higher gear ratio than the gear ratio of the first gear speed.

7. Gearbox according to claim 5 or 6, **characterized in that** the input shaft has six gear wheels (6-11) in engagement with gear wheels (13, 14, 16, 17, 19, 20) on the countershafts (3, 4) for transferring torque to the crown wheel (26) for forward drive with six different gear speeds.

## Patentansprüche

1. Kraftfahrzeuggetriebe umfassend ein Gehäuse (1) mit einer Antriebswelle (2) und zwei Gegenwellen (3, 4), die in einer zu der Antriebswelle versetzten Ebene liegen und Zahnräder (13, 14, 16, 17, 19, 20) in Eingriff mit Zahnrädern (6 - 11) auf der Antriebswelle aufweisen, um ein Drehmoment mit einer Anzahl von Vorwärtsgängen zu übertragen, wobei zumindest ein Zahnrad eines jeden Paars miteinander in Eingriff stehender Zahnräder auf der Antriebswelle und den Gegenwellen von seiner Welle außer Eingriff bringbar ist, wobei ein Zahnrad (22) zum Übertragen eines Drehmoments in der Rückfahrrichtung außer Eingriff bringbar auf einer vierten Welle (5) getragen wird, wobei jede der Gegenwellen und die vierte Welle ein Zahnrad (24, 25, 28) aufweisen, welches nicht drehbar mit seiner Welle verbunden ist, um ein Drehmoment an das Abtriebsmittel (26) zu übertragen, **dadurch gekennzeichnet, dass** die vierte Welle (5) außer Eingriff bringbar ein zweites Zahnrad (30) trägt, welches mit einem ersten Zahnrad (31) in Eingriff steht, das auf einer Übertragungswelle (32) getragen wird, welche in einer zu der vierten Welle versetzten Ebene liegt, wobei die Übertragungswelle ein zweites Zahnrad (33) trägt, das mit einem außer Eingriff bringbaren Zahnrad (16) auf einer (4) der Gegenwellen in Eingriff steht, um ein Drehmoment mit einem Vorwärtsgang zu übertragen.

2. Getriebe nach Anspruch 1, **dadurch gekennzeichnet, dass** ein außer Eingriff bringbares Zahnrad (22) auf der vierten Welle (5) zum Übertragen eines Drehmoments in der Rückfahrrichtung in ein außer Eingriff bringbares Zahnrad (16) auf einer der Gegenwellen (4) eingreift.

3. Getriebe nach Anspruch 1 oder 2, **dadurch gekennzeichnet, dass** die Übertragungswelle (32) ein drittes Zahnrad (40) trägt, welches über ein Zahnrad (41) auf einer Zwischenwelle (42) ein Drehmoment auf ein Zahnrad (43; 50) überträgt, das außer Eingriff bringbar auf der vierten Welle (5) zum Übertragen eines Drehmoments in der Rückfahrrichtung getragen wird.

4. Getriebe nach einem der Ansprüche 1-3, **dadurch gekennzeichnet, dass** das Abtriebsmittel ein Tellerrad (26) eines Differenzials (27) ist, das mit den Zahnrädern (24, 25, 28) in Eingriff steht, welche nicht drehbar mit den Gegenwellen (3, 4) und der vierten Welle (5) verbunden sind.

5. Getriebe nach Anspruch 4, **dadurch gekennzeichnet, dass** die Antriebswelle zumindest fünf Zahnräder (6 - 11) in Eingriff mit den Zahnrädern (13, 14, 16, 17, 19, 20) auf den Gegenwellen (3, 4) aufweist, um ein Drehmoment auf das Tellerrad (26) für die Vorwärtsfahrt mit zumindest fünf unterschiedlichen Gängen zu übertragen, und dass das außer Eingriff bringbare Zahnrad (16), das mit dem zweiten Zahnrad (33) auf der Übertragungswelle in Eingriff steht, das Zahnrad zum Übertragen eines Drehmoments in dem ersten Gang ist, um ein Drehmoment für die Vorwärtsfahrt mit einem zusätzlichen Gang, der sich von den fünf unterschiedlichen Gängen unterscheidet, zu übertragen.

6. Getriebe nach Anspruch 5, **dadurch gekennzeichnet, dass** der zusätzliche Gang ein Kriechgang mit einer größeren Übersetzung als jene des ersten Gangs ist.

7. Getriebe nach Anspruch 5 oder 6, **dadurch gekennzeichnet, dass** die Antriebswelle sechs Zahnräder (6 - 11) in Eingriff mit den Zahnrädern (13, 14, 16, 17, 19, 20) auf den Gegenwellen (3, 4) aufweist, um ein Drehmoment an das Tellerrad (26) für die Vorwärtsfahrt mit sechs unterschiedlichen Gängen zu übertragen.

## Revendications

1. Une boîte de vitesses de véhicule motorisé comportant un carter (1) avec un arbre d'entrée (2) et deux arbres intermédiaires (3, 4) s'étalant en un plan décalé par rapport audit arbre d'entrée et ayant des roues dentées (13, 14, 16, 17, 19, 20) en engrènement avec des roues dentées (6-11) sur l'arbre d'entrée pour transmettre un couple avec un certain nombre de vitesses de marche avant, au moins une roue dentée de chaque paire de roues dentées s'engrenant mutuellement sur ledit arbre d'entrée et sur lesdits arbres intermédiaires étant débrayable de son arbre, une roue dentée (22) pour transmettre un couple en marche arrière étant portée de manière débrayable sur un quatrième arbre (5), chacun desdits arbres intermédiaires et ledit quatrième arbre ayant une roue dentée (24, 25, 28) reliée de manière non rotative à son arbre pour transmettre un couple au moyen de sortie (26), **caractérisée en ce que** ledit quatrième arbre (5) porte de manière débrayable une deuxième roue dentée (30) s'engrenant avec une première roue dentée (31) portée sur un arbre de transfert (32) s'étalant en un plan décalé par rapport au quatrième arbre, ledit arbre de transfert portant une deuxième roue dentée (33) qui s'engrène avec une roue dentée débrayable (16) sur un (4) des arbres intermédiaires pour transmettre un couple avec une vitesse de marche avant.

2. Une boîte de vitesses selon la revendication 1, **caractérisée en ce qu'**une roue dentée débrayable (22) sur le quatrième arbre (5) pour transmettre un couple en marche arrière s'engrène avec une roue dentée débrayable (16) sur un des arbres intermédiaires (4).

3. Une boîte de vitesses selon la revendication 1 ou 2, **caractérisée en ce que** ledit arbre de transfert (32) porte une troisième roue dentée (40) qui, via une roue dentée (41) sur un arbre intermédiaire (42), transmet un couple à une roue dentée (43; 50) portée de manière débrayable sur le quatrième arbre (5) pour transmettre un couple en marche arrière.

4. Une boîte de vitesses selon l'une quelconque des revendications 1-3, **caractérisée en ce que** ledit moyen de sortie est une grande couronne (26) d'un différentiel (27) s'engrenant avec lesdites roues dentées (24, 25, 28) reliées de manière non rotative aux arbres intermédiaires (3, 4) et au quatrième arbre (5).

5. Une boîte de vitesses selon la revendication 4, **caractérisée en ce que** l'arbre d'entrée présente au moins cinq roues dentées (6-11) en engrènement avec des roues dentées (13, 14, 16, 17, 19, 20) sur les arbres intermédiaires (3, 4) pour transmettre un couple à la grande couronne (26) pour une marche avant avec au moins cinq vitesses différentes et **en ce que** ladite roue dentée débrayable (16) s'engrenant avec la deuxième roue dentée (33) sur l'arbre de transfert est la roue dentée qui sert à transmettre un couple à la première vitesse afin de transmettre un couple pour une marche avant avec une vitesse additionnelle différente desdites cinq vitesses différentes.

6. Une boîte de vitesses selon la revendication 5, **caractérisée en ce que** ladite vitesse additionnelle est une vitesse de rampage avec un rapport de vitesse plus élevé que le rapport de vitesse de la première vitesse.

7. Une boîte de vitesses selon la revendication 5 ou 6, **caractérisée en ce que** l'arbre d'entrée présente six roues dentées (6-11) en engrènement avec des roues dentées (13, 14, 16, 17, 19, 20) sur les arbres intermédiaires (3, 4) pour transmettre un couple à la grande couronne (26) pour une marche avant avec six vitesses différentes.
